# EUROPÄISCHE PATENTANMELDUNG

(11) **EP 4 847 547 A1**
(43) Veröffentlichungstag der Anmeldung: **02.12.2026**
(21) Anmeldenummer: 25179609.0
(22) Anmeldetag: 28.05.2025
(51) Int. Cl.: C08G 63/676, C08G 63/685, C08G 63/91, C08L 101/06

(54) **ALDIMINE FÜR DIE VERNETZUNG VON POLYMERZUSAMMENSETZUNGEN MIT KETOESTERGRUPPEN**

(71) Anmelder: Sika Technology AG, 6340 Baar (CH)
(72) Erfinder: HÄBERLE, Hans, 8048 Zürich (CH); BURCKHARDT, Urs, 8048 Zürich (CH)
(74) Vertreter: Sika Patent Attorneys

(57) **Zusammenfassung**

Gegenstand der Erfindung ist die Verwendung von mindestens einem Aldimin mit Aldimingruppen der Formel (I) zum Aushärten einer Zusammensetzung enthaltend mindestens ein Polymer **P** mit Ketoestergruppen der Formel (II) ausgewählt aus Polyetherpolymeren, Polyesterpolymeren, Rizinusöl-basierten Polymeren und Polybutadienpolymeren.

Die beschriebene Verwendung ermöglicht elastische oder zähelastische Zusammensetzungen mit schneller Aushärtung und überraschend hoher Dehnung bei hoher Härte und Festigkeit, insbesondere im Vergleich zu Zusammensetzungen mit Aldimingruppen abgeleitet von Benzaldehyd anstelle von Aldimingruppen der Formel (I).

## Beschreibung

### Technisches Gebiet

Die Erfindung betrifft bei Raumtemperatur härtbare elastische oder zähelastische Zusammensetzungen mit Ketoester- und Aldimingruppen.

### Stand der Technik

Bei Raumtemperatur härtbare Polymerzusammensetzungen mit elastischen oder zähelastischen Eigenschaften und ihre Verwendung in Beschichtungen, Klebstoffen und Dichtstoffen sind bekannt. Typischerweise enthalten sie Reaktivgruppen wie Epoxidgruppen, Isocyanatgruppen oder Organosilangruppen. Diese bekannten Systeme weisen aber eine Reihe von Nachteilen auf. Epoxidharz-Zusammensetzungen sind typischerweise kaum dehnbar, neigen bei grossflächiger Applikation aufgrund von Blushing zu unschönen und teilweise klebrigen Oberflächen und die darin enthaltenen Epoxidharze und Amine sind oft gesundheitsschädlich. Isocyanate sind toxische und feuchteempfindliche Substanzen, deren Handhabung viel technisches Knowhow und Schutzmassnahmen erfordert. Zusammensetzungen mit Organosilangruppen sind ebenfalls empfindlich gegen Feuchtigkeit, zudem werden bei der Aushärtung flüchtige Alkohole freigesetzt, wodurch unerwünschte Emissionen entstehen, und die Zähigkeit der ausgehärteten Produkte ist meist unbefriedigend.

Seit neuerem beschrieben sind Polymerzusammensetzungen mit 1,3-Ketoestergruppen, insbesondere Acetoacetatgruppen, welche bei Raumtemperatur mit aromatischen Aldiminen aushärten. US 5,288,804 beschreibt lösemittelbasierte Lacke auf der Basis von Acetoacetat-funktionellen Acrylatpolymeren, welche mittels Benzaldiminen ausgehärtet werden. Diese beschriebenen Lacke verursachen hohe Emissionen, sind kaum dehnbar und nicht zähelastisch.

### Darstellung der Erfindung

Aufgabe der vorliegenden Erfindung ist es, eine bei Raumtemperatur härtbare Polymerzusammensetzung zur Verfügung zu stellen, welche elastische oder zähelastische Produkte mit hoher Dehnbarkeit ermöglicht und die Nachteile des Standes der Technik in Bezug auf toxische Inhaltsstoffe, Feuchteempfindlichkeit und Emissionen überwindet.

Überraschenderweise wird diese Aufgabe mit der in Anspruch 1 beschriebenen Verwendung von mindestens einem Aldimin mit Aldimingruppen der Formel (I) zum Aushärten einer Zusammensetzung enthaltend mindestens ein Polymer **P** mit Ketoestergruppen der Formel (II) ausgewählt aus Polyetherpolymeren, Polyesterpolymeren, Rizinusöl-basierten Polymeren und Polybutadienpolymeren gelöst. Zusammensetzungen auf Basis eines Polymers **P** ermöglichen elastische oder zähelastische Produkte, wobei die Aldimingruppen der Formel (I) abgeleitet von einem C₁₋₄-Alkylbenzaldehyd im Vergleich zu entsprechenden Aldiminen abgeleitet von Benzaldehyd eine schnelle Aushärtung und eine überraschend hohe Dehnbarkeit bei hoher Härte und Festigkeit ermöglichen.

Die vorliegende Erfindung ermöglicht Polymerzusammensetzungen mit gut verfügbaren, preisgünstigen und toxikologisch vorteilhaften Inhaltsstoffen, wobei die Zusammensetzungen wenig empfindlich gegenüber Feuchtigkeit sind, bei der Anwendung lang verarbeitbar sind und bei Umgebungsbedingungen schnell und zuverlässig zu Produkten mit hoher Dehnbarkeit bei hoher Festigkeit aushärten. Solche Produkte sind besonders geeignet als elastische oder zähelastische Klebstoffe, Dichtstoffe oder Beschichtungen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist die Verwendung eines Aldimins mit Aldimingruppen der Formel (I) zum Aushärten einer Zusammensetzung enthaltend mindestens ein Polymer **P** mit Ketoestergruppen der Formel (II) ausgewählt aus Polyetherpolymeren, Polyesterpolymeren, Rizinusöl-basierten Polymeren und Polybutadienpolymeren, 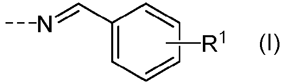 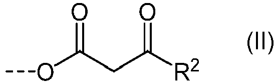 wobei R¹ für einen Alkylrest mit 1 bis 4 C-Atomen steht, und R² für einen einwertigen Kohlenwasserstoffrest mit 1 bis 6 C-Atomen steht.

Als "zähelastisch" werden Produkte mit einer Shore Härte ab etwa D 50 und einer Bruchdehnung von mindestens 10 % bezeichnet.

Mit "Poly" beginnende Substanznamen wie Polyamin, Polyisocyanat oder Polyacetoacetat bezeichnen Substanzen, die formal zwei oder mehr der in ihrem Namen vorkommenden funktionellen Gruppen pro Molekül enthalten.

Als "Molekulargewicht" wird die molare Masse (in Gramm pro Mol) eines Moleküls bezeichnet. Als "mittleres Molekulargewicht" wird das Zahlenmittel des Molekulargewichts (Mₙ) einer polydispersen Mischung von oligomeren oder polymeren Molekülen bezeichnet. Es wird mittels Gelpermeationschromatographie (GPC) gegen Polystyrol als Standard bestimmt.

Als "Equivalentgewicht" wird die Masse eines Moleküls oder einer Zusammensetzung pro Molequivalent einer funktionellen Gruppe bezeichnet (in Gramm pro Equivalent).

Als "lagerstabil" wird eine Zusammensetzung bezeichnet, wenn sie bei Raumtemperatur in einem geeigneten Gebinde während längerer Zeit, typischerweise während mindestens drei Monaten bis zu sechs Monaten und mehr, aufbewahrt werden kann, ohne dass sie sich in ihren Anwendungs- oder Gebrauchseigenschaften durch die Lagerung in einem für ihren Gebrauch relevanten Ausmass verändert. Als "Raumtemperatur" wird eine Temperatur von 23 °C bezeichnet.

Alle im Dokument erwähnten Industriestandards und Normen beziehen sich auf die zum Zeitpunkt der Einreichung der Erstanmeldung gültigen Fassungen. Gewichtsprozente (Gewichts-%) bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.

Bevorzugt steht R¹ in Formel (I) für Methyl, Ethyl, Isopropyl oder Isobutyl.

Bevorzugt steht R¹ in para-Stellung.

Besonders bevorzugt steht R¹ für Methyl, wobei R¹ insbesondere in para-Stellung steht. Eine solche Aldimingruppe der Formel (I) ist abgeleitet von Tolualdehyd, insbesondere von 4-Tolualdehyd. Solche Aldimine ermöglichen überraschenderweise eine besonders hohe Dehnbarkeit.

Bevorzugt enthält das Aldimin mit Aldimingruppen der Formel (I) mindestens zwei Aldimingruppen der Formel (I), insbesondere zwei oder drei Aldimingruppen der Formel (I).

Bevorzugt hat das Aldimin mit Aldimingruppen der Formel (I) ein Aldimin-Equivalentgewicht von 132 bis 2'500 g/eq, bevorzugt 139 bis 1'200 g/eq, insbesondere 153 bis 800 g/eq.

Bevorzugt als Aldimin mit Aldimingruppen der Formel (I) sind Umsetzungsprodukte von handelsüblichen primären Polyaminen mit mindestens einem Aldehyd der Formel (III) unter Freisetzung und Entfernung von Wasser, 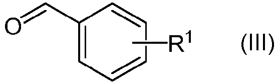 wobei R¹ die bereits genannten Bedeutungen aufweist.

Dafür bevorzugt sind aliphatische oder cycloaliphatische primäre Polyamine, insbesondere ausgewählt aus der Liste bestehend aus 1,2-Ethandiamin, 1,2-Propandiamin, 1,3-Propandiamin, 1,4-Butandiamin, 1,5-Pentandiamin, 2,2-Dimethyl-1,3-propandiamin, 1,3-Pentandiamin (DAMP), 1,6-Hexandiamin, 1,5-Diamino-2-methylpentan (MPMD), 1,7-Heptandiamin, 1,8-Octandiamin, 2,5-Dimethyl-1,6-hexandiamin, 1,9-Nonandiamin, 2,2(4),4-Trimethyl-1,6-hexandiamin (TMD), 1,10-Decandiamin, 1,11-Undecandiamin, 2-Butyl-2-ethyl-1,5-pentandiamin (C11-Neodiamin), 1,12-Dodecandiamin, 1,2-Diaminocyclohexan, 1,3-Diaminocyclohexan, 1,4-Diaminocyclohexan, 1,3-Bis(aminomethyl)cyclohexan, 1,4-Bis-(aminomethyl)cyclohexan, 1,3-Bis(aminomethyl)benzol (MXDA), Isophorondiamin (IPDA), 2(4)-Methyl-1,3-diaminocyclohexan, Bis(4-aminocyclohexyl)methan, 2,5(6)-Bis(aminomethyl)bicyclo[2.2.1]heptan (NBDA), 3(4),8(9)-Bis(aminomethyl)-tricyclo[5.2.1.0^{2,6}]decan (TCD-Diamin), 4,9-Dioxadodecan-1,12-diamin, 4,7,10-Trioxatridecan-1,13-diamin, Polyoxypropylendiaminen mit einem mittleren Molekulargewicht Mₙ von 200 bis 4'000 g/mol und Polyoxypropylentriaminen mit einem mittleren Molekulargewicht Mₙ von 300 bis 5'000 g/mol.

Bevorzugte Polyoxypropylendi- oder -triamine sind solche mit einem mittleren Molekulargewicht Mₙ von 200 bis 500 g/mol, insbesondere Jeffamine^{®} D-230, Jeffamine^{®} D-400 oder Jeffamine^{®} T-403 (alle von Huntsman), sowie entsprechende Typen von BASF oder Nitroil.

Bevorzugt als Aldehyd der Formel (III) ist 2-Tolualdehyd, 3-Tolualdehyd, 4-Tolualdehyd, 4-Ethylbenzaldehyd, 4-Isopropylbenzaldehyd oder 4-Isobutylbenzaldehyd, insbesondere die Tolualdehyde. Am meisten bevorzugt ist 4-Tolualdehyd.

Weiterhin bevorzugt als Aldimin mit Aldimingruppen der Formel (I) sind Aldimine aus der Addition von Hydroxyaldiminen an Polyisocyanate, insbesondere an Isocyanatgruppen-haltige Polymere, wobei als Hydroxyaldimin insbesondere ein Umsetzungsprodukt von 2-(2-Aminoethoxy)ethanol und einem Aldehyd der Formel (III) unter Freisetzung und Entfernung von Wasser geeignet ist, insbesondere N-(4-Methylbenzyliden)-2-(2-aminoethoxy)ethanol.

Bevorzugt ist das Aldimin mit Aldimingruppen der Formel (I) ausgewählt aus der Liste bestehend aus N,N'-Di(4-methylbenzyliden)-1,5-pentandiamin, N,N'-Di(4-methylbenzyliden)-1,6-hexandiamin, N,N'-Di(4-methylbenzyliden)-2-methyl-1,5-pentandiamin, N,N'- Di(4-methylbenzyliden)-2,2(4),4-trimethyl-1,6-hexandiamin, N,N'-Di(4-methylbenzyliden)polyoxypropylendiaminen mit mittlerem Molekulargewicht Mₙ von 400 bis 4'000 g/mol, insbesondere 400 bis 700 g/mol, N,N',N"-Tri(4-methylbenzyliden)polyoxypropylentriaminen mit mittlerem Molekulargewicht Mₙ von 500 bis 5'000 g/mol, insbesondere 600 bis 800 g/mol, Aldiminen aus der Addition von N-(4-Methylbenzyliden)-2-(2-aminoethoxy)ethanol an Polyisocyanate, und entsprechenden Verbindungen abgeleitet von 4-Ethylbenzaldehyd, 4-Isopropylbenzaldehyd oder 4-Isobutylbenzaldehyd anstelle von 4-Methylbenzaldehyd.

Bevorzugt sind die Aldimine abgeleitet von 4-Methylbenzaldehyd bzw. 4-Tolualdehyd.

Besonders bevorzugt ist N,N'-Di(4-methylbenzyliden)-1,5-pentandiamin, N,N'-Di(4-methylbenzyliden)-1,6-hexandiamin, N,N'-Di(4-methylbenzyliden)-2-methyl-1,5-pentandiamin, N,N'- Di(4-methylbenzyliden)-2,2(4),4-trimethyl-1,6-hexandiamin oder N,N'-Di(4-methylbenzyliden)polyoxypropylendiamin mit mittlerem Molekulargewicht Mₙ von 400 bis 700 g/mol.

Bevorzugt steht R² in Formel (II) für einen Alkylrest mit 1 bis 6 C-Atomen oder für Phenyl, besonders bevorzugt für Methyl, Ethyl, Propyl, Isopropyl, Butyl oder Phenyl.

Besonders bevorzugt steht R² für Methyl und die Ketoestergruppen der Formel (II) sind somit Acetoacetatgruppen. Verbindungen mit Acetoacetatgruppen sind besonders einfach zugänglich und ermöglichen Zusammensetzungen mit besonders schneller Aushärtung.

Bevorzugt hat das Polymer **P** mit Ketoestergruppen der Formel (II) eine mittlere Ketoester-Funktionalität von 1.8 bis 3.5, insbesondere 2 bis 3.

Bevorzugt hat das Polymer **P** mit Ketoestergruppen der Formel (II) ein mittleres Molekulargewicht Mₙ von 800 bis 20'000 g/mol, besonders bevorzugt 800 bis 10'000 g/mol, insbesondere 800 bis 5'000 g/mol.

Bevorzugt ist das Polymer **P** bei Raumtemperatur flüssig.

Bevorzugt hat das Polymer **P** mit Ketoestergruppen der Formel (II) eine mittlere Ketoester-Funktionalität von 1.8 bis 3.5, insbesondere 2 bis 3, und ein mittleres Molekulargewicht Mₙ von 800 bis 20'000 g/mol, besonders bevorzugt 800 bis 10'000 g/mol, insbesondere 800 bis 5'000 g/mol.

Das Polymer **P** mit Ketoestergruppen der Formel (II) ist ausgewählt aus Polyetherpolymeren, Polyesterpolymeren, Rizinusöl-basierten Polymeren und Polybutadienpolymeren.

Bevorzugt ist das Polymer **P** ein Unsetzungsprodukt aus der Umesterung von mindestens einem Polyol ausgewählt aus Polyetherpolyolen, Polyesterpolyolen, Rizinusöl-basierten Polyolen und Polybutadienpolyolen, mit mindestens einem Ketoester der Formel (IV), 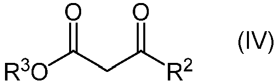 wobei R³ für C₁₋₆ Alkyl steht und R² die bereits genannten Bedeutungen aufweist. Bevorzugt steht R³ für Methyl, Ethyl oder tert-Butyl, insbesondere für Ethyl oder tert-Butyl.

Bevorzugt erfolgt die Umesterung bei einer Temperatur im Bereich von 50 bis 180 °C unter destillativer Entfernung des freigesetzten Alkohols R³OH und gegebenenfalls Fragmentierungsprodukten davon, gegebenenfalls unter Vakuum und gegebenenfalls in Anwesenheit eines geeigneten Katalysators.

Ebenfalls möglich ist eine Herstellung, bei welcher das Polyol mit Diketen oder dem Addukt von Diketen mit Aceton (= 2,2,6-Trimethyl-4H-1,3-dioxin-4-on) umgesetzt wird, wobei im Fall des Aceton-Diketen-Addukts Aceton freigesetzt wird.

Ein als Polymer **P** geeignetes Polyetherpolymer mit Ketoestergruppen der Formel (II) ist insbesondere ein Acetoacetat von einem Poly(oxy-1,3-propylen)diol, Poly-(oxy-1,4-butylen)diol oder insbesondere einem Poly(oxy-1,2-propylen)diol oder Poly(oxy-1,2-propylen)triol, wobei an den Kettenenden bis zu 25 Gewichts-% Oxy-1,2-ethylen-Einheiten bezogen auf das gesamte Poly(oxy-1,2-propylen)di- oder triol vorhanden sein können.

Ein als Polymer **P** geeignetes Polyesterpolyol mit Ketoestergruppen der Formel (II) ist insbesondere ein Acetoacetat von einem amorphen Polyesterpolyol aus der Veresterung einer Dimerfettsäure oder Trimerfettsäure oder eines Dimerfettalkohols oder Trimerfettalkohols, oder ein Acetoacetat von einem amorphen, gesättigten, bei Raumtemperatur flüssigen Polyesterdiol oder Polyestertriol, insbesondere aus der Umsetzung von Dicarbonsäuren wie insbesondere Bernsteinsäure, Glutarsäure, Adipinsäure, Pimelinsäure, Korksäure, Azelainsäure, Sebacinsäure oder Dodecandicarbonsäure, mit Alkoholen wie insbesondere 1,2-Ethandiol, Diethylenglykol, 1,2-Propandiol, 1,3-Propandiol, 2-Methyl-1,3-propandiol, Dipropylenglykol, 1,4-Butandiol, 1,5-Pentandiol, 3-Methyl-1,5-pentandiol, 1,6-Hexandiol, Neopentylglykol, 1,3-Cyclohexandimethanol, 1,4-Cyclohexandimethanol, Trimethylolpropan, Isosorbid oder Glycerin.

Besonders bevorzugt ist das Polyesterpolyol mit Ketoestergruppen der Formel (II) ein Dimerfettsäure- oder Trimerfettsäure-basiertes Polyesterpolyol mit Ketoestergruppen der Formel (II).

Ein als Polymer **P** geeignetes Rizinusöl-basiertes Polymer mit Ketoestergruppen der Formel (II) ist insbesondere ein Acetoacetat von Rizinusöl oder einem Polyesterpolyol aus der Umsetzung von Rizinusöl, insbesondere ein Acetoacetat von Setathane^{®} D 1145 oder Setathane^{®} D 1150 (beide von Allnex).

Ein als Polymer **P** geeignetes Polybutadienpolymer mit Ketoestergruppen der Formel (II) ist insbesondere ein Acetoacetat von einem Polybutadienpolyol, insbesondere einem Polybutadienpolyol aus Polymerisation von 1,3-Butadien und Anteilen an Allylalkohol oder aus der Oxidation eines Polybutadiens. Besonders geeignet ist das Acetoacetat von Poly bd^{®} R45 HTLO (von Resin Solutions).

Besonders bevorzugt als Polymer **P** ist ein Poly(oxy-1,2-propylen)dioldiaceto-acetat, ein Poly(oxy-1,2-propylen)triotriacetoacetat mit gegebenenfalls zusätzlich Oxy-1,2-ethylen-Einheiten, ein Dimerfettsäure oder Trimerfettsäure basiertes Polyesterpolyacetoacetat oder ein Rizinusöl-basiertes Polyacetoacetat.

Für die erfindungsgemässe Verwendung enthält die Zusammensetzung in einer bevorzugten Ausführungsform zusätzlich mindestens eine weitere Verbindung mit mindestens zwei Ketoestergruppen der Formel (II), insbesondere ausgewählt aus der Liste bestehend aus 1,2-Propandioldiacetoacetat, Dipropylenglykoldiacetoacetat, Tripropylenglykodiacetoacetat, 1,3-Propandioldiacetoacetat, 1,4-Butandioldiacetoacetat, 1,2-Butandioldiacetoacetat, 2-Methyl-1,3-propandioldiacetoacetat, 1,5-Pentandioldiacetoacetat, 1,2-Pentandioldiacetoacetat, Neopentylglykoldiacetoacetat, 2-Methyl-1,4-butandioldiacetoacetat, 1,6-Hexandioldiacetoacetat, 3-Methyl-1,5-pentandioldiacetoacetat, 1,8-Octandioldiacetoacetat, 2-Ethyl-1,3-hexandioldiacetoacetat, 1,10-Decandioldiacetoacetat, 1,12-Dodecandioldiacetoacetat, Polytetrahydrofurandioldiacetoacetaten, 1,3-Cyclohexandimethanoldiacetoacetat, 1,4-Cyclohexandimethanoldiacetoacetat, Isosorbiddiacetoacetat, 2,5-Bis(hydroxymethyl)tetrahydrofurandiacetoacetat, 2,5(6)-Bis(hydroxymethyl)bicyclo[2.2.1]-heptandiacetoacetat, 3(4),8(9)-Bis(hydroxymethyl)tricycl[5.2.1.0^{2,6}]decandiaceto-acetat, hydriertes Bisphenol F-diacetoacetat, hydriertes Bisphenol A-diacetoacetat, Glycerindiacetoacetat, Glycerintriacetoacetat, 1,1,1-Trimethylolethandiacetoacetat, 1,1,1-Trimethylolethantriacetoacetat, 1,1,1-Trimethylolpropandiacetoacetat, 1,1,1-Trimethylolpropantriacetoacetat, Pentaerythrittriacetoacetat, Pentaerythrittetraacetoacetat, Dipentaerythrittriacetoacetat, dem Triacetoacetat von ethoxyliertem und insbesondere propoxyliertem Glycerin, dem Triacetoacetat von ethoxyliertem und insbesondere propoxyliertem 1,1,1-Trimethylolpropan, Poly(oxy-1,2-propylen)dioldiacetoacetaten und Acetoacetat-funktionellen Pflanzenölen.

Mit einer solchen weitere Verbindung mit Ketoestergruppen der Formel (II) können insbesondere die mechanischen Eigenschaften beeinflusst werden, insbesondere in Richtung höhere Härte und/oder Festigkeit.

Bei der erfindungsgemässen Verwendung liegt das Verhältnis der Anzahl Ketoestergruppen der Formel (II) zur Anzahl Aldimingruppen der Formel (I) bevorzugt im Bereich von 1 bis 4, besonders bevorzugt 1.5 bis 3.5, insbesondere 2 bis 3. Dies ermöglicht eine besonders hohe Dehnung und Festigkeit.

Die Verwendung eines Aldimins mit Aldimingruppen der Formel (I) abgeleitet von einem C₁₋₄-Alkylbenzaldehyd ermöglicht elastische oder zähelastische Produkte mit schneller Aushärtung und überraschend hoher Dehnung bei hoher Härte und Festigkeit, insbesondere im Vergleich zur Verwendung eines Aldimins mit Aldimingruppen abgeleitet von Benzaldehyd.

Ein weiterer Gegenstand der Erfindung ist die härtbare Zusammensetzung erhalten aus der beschriebenen Verwendung.

Die härtbare Zusammensetzung enthält mindestens ein Polymer **P** mit Ketoestergruppen der Formel (II) ausgewählt aus Polyetherpolymeren, Polyesterpolymeren, Rizinusöl-basierten Polymeren und Polybutadienpolymeren, gegebenenfalls mindestens eine weitere Verbindung mit Ketoestergruppen der Formel (II), und mindestens ein Aldimin mit Aldimingruppen der Formel (I), wobei das Verhältnis der Anzahl Ketoestergruppen der Formel (II) zur Anzahl Aldimingruppen der Formel (I) bevorzugt im Bereich von 1 bis 4, bevorzugt 1.5 bis 3.5, insbesondere 2 bis 3, liegt, wie vorgängig beschrieben.

Die härtbare Zusammensetzung kann zusätzlich weitere Bestandteile enthalten, insbesondere
- Füllstoffe, insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, Kaoline, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, industriell hergestellte Russe, Graphit, gemahlene Füllstoffe aus landwirtschaftlichen Quellen wie insbesondere Olivenkernmehl oder Nussschalenmehl, Metall-Pulver, beispielsweise von Aluminium, Kupfer, Eisen, Silber oder Stahl, PVC-Pulver oder organische oder anorganische Hohlkugeln,
- Beschleuniger, insbesondere eine Carbonsäure wie Milchsäure, Lävulinsäure, Heptansäure, Octansäure, Nonansäure, Decansäure, Undecansäure, Laurinsäure, Stearinsäure, Isostearinsäure, Benzoesäure oder 4-Aminobenzoesäure,
- Fasern, insbesondere Glasfasern, Kohlefasern, Metallfasern, Keramikfasern, Hanffasern, Zellulosefasern oder Kunststofffasern wie Polyamidfasern, Polyesterfasern, Polyethylenfasern oder Polypropylenfasern,
- Nanofüllstoffe oder Nanofasern wie Graphen oder Carbon Nanotubes,
- Farbstoffe,
- Pigmente, insbesondere Titandioxid, Chromoxid, Eisenoxide oder organische Pigmente,
- Weichmacher, insbesondere Phthalate, insbesondere Diisononylphthalat (DINP), Diisodecylphthalat (DIDP) oder Di(2-propylheptyl)phthalat (DPHP), hydrierte Phthalate, insbesondere Diisononyl-1,2-cyclohexandicarboxylat (DINCH), Terephthalate, insbesondere Bis(2-ethylhexyl)terephthalat oder Diisononylterephthalat (DINT), hydrierte Terephthalate, insbesondere Bis(2-ethylhexyl)-1,4-cyclohexandicarboxylat oder Diisononyl-1,4-cyclohexandicar-boxylat, Isophthalate, Trimellitate, Adipate, insbesondere Dioctyladipat (DOA), Azelate, Sebacate, Citrate, Benzoate, Glycolether, Glycolester, Weichmacher mit Polyetherstruktur, insbesondere Poly(oxy-1,2-propylen)-monole, -diole oder -triole, gegebenenfalls mit blockierten Hydroxylgruppen, insbesondere in der Form von Acetylgruppen, sowie organische Sulfonate oder Phosphate, insbesondere Diphenylkresylphosphat (DPK) oder Tris-2-ethyl-hexylphosphat (TOF), Polybutene, Polyisobutene, Kohlenwasserstoffharze oder von natürlichen Fetten oder Ölen abgeleitete Weichmacher, insbesondere epoxidiertes Soja-oder Leinöl oder Rapsölmethylester, wobei Phthalate, hydrierte Phthalate, Adipate oder Weichmacher mit Polyetherstruktur bevorzugt sind,
- Verdünner wie insbesondere Benzylalkohol, 2-Phenoxyethanol, 2-Benzyloxyethanol, phenolgruppenhaltige aromatische Kohlenwasserstoffharze, Diisopropylnaphthalin, Isopropylbiphenyle oder hochsiedende aliphatische Kohlenwasserstoffe,
- Lösemittel,
- Rheologie-Modifizierer, insbesondere Harnstoffverbindungen, Schichtsilikate wie Bentonite, Derivate von natürlich vorkommenden Ölen wie Rizinusöl, hydriertes Rizinusöl, Polyamide, Polyurethane, pyrogene Kieselsäuren oder hydrophob modifizierte Polyoxyethylene,
- Haftvermittler, insbesondere Titanate oder Organoalkoxysilane wie Aminosilane, Mercaptosilane, Epoxysilane, (Meth)acrylsilane, Carbamatosilane, Alkylsilane, S-(Alkylcarbonyl)mercaptosilane oder oligomere Formen dieser Silane,
- flammhemmende Substanzen, insbesondere die bereits genannten Füllstoffe Aluminiumhydroxid oder Magnesiumhydroxid, organische Phosphorsäureester, Ammoniumpolyphosphate, expandierender Graphit, Melaminverbindungen, Borverbindungen oder Antimonverbindungen,
- oberflächenaktive Additive, insbesondere Netzmittel, Verlaufmittel, Entschäumer oder Entlüfter,
- Stabilisatoren gegen Oxidation, Wärme, Licht oder UV-Strahlung oder Biozide, sowie weitere üblicherweise in härtbaren Zusammensetzungen eingesetzte Substanzen.

Bevorzugt enthält die härtbare Zusammensetzung mindestens einen weiteren Bestandteil ausgewählt aus Füllstoffen, Pigmenten, Weichmachern, Verdünnern und oberflächenaktiven Additiven.

Die härtbare Zusammensetzung enthält bezogen auf die gesamte Zusammensetzung bevorzugt weniger als 10 Gewichts-%, besonders bevorzugt weniger als 5 Gewichts-%, insbesondere weniger als 1 Gewichts-%, flüchtige organische Lösemittel mit einem Siedepunkt bei Normaldruck von weniger als 250 °C. Eine solche Zusammensetzung verursacht besonders wenig Emissionen.

Die härtbare Zusammensetzung ist bevorzugt nicht wasserbasiert, das heisst sie liegt weder als Lösung noch als Emulsion oder Dispersion in Wasser vor. Sie ist bevorzugt weitgehend frei von Wasser oder enthält nur einen geringen Gehalt an Wasser. Eine solche Zusammensetzung härtet unabhängig von der Umgebungsfeuchte schnell aus, kann in dicken Schichten und/oder zwischen wasserdichten Substraten eingesetzt werden und zeigt kaum Schwund bei der Aushärtung. Bevorzugt enthält die härtbare Zusammensetzung weniger als 10 Gewichts-%, bevorzugt weniger als 5 Gewichts-%, insbesondere weniger als 2 Gewichts-%, Wasser bezogen auf die gesamte Zusammensetzung.

Bevorzugt umfasst die härtbare Zusammensetzung eine Komponente **K1** und eine Komponente **K2,** welche voneinander getrennt hergestellt und verpackt sind, wobei Verbindungen mit Ketoestergruppen der Formel (II) Bestandteil der Komponente **K1** und Verbindungen mit Aldimingruppen der Formel (I) Bestandteil der Komponente **K2** sind.

Weitere Inhaltsstoffe der Zusammensetzung können als Bestandteil der Komponente **K1** und/oder der Komponente **K2** vorhanden sein, wobei mit Aldimingruppen der Formel (I) reaktive Bestandteile bevorzugt als Bestandteil der Komponente **K1** und mit Ketoestergruppen der Formel (II) reaktive Bestandteile bevorzugt als Bestandteil der Komponente **K2** vorliegen.

Die Komponenten **K1** und **K2** werden getrennt voneinander hergestellt und aufbewahrt. Zur Herstellung werden die Inhaltsstoffe der jeweiligen Komponente miteinander vermischt, so dass eine makroskopisch homogene Masse entsteht.

Die Komponenten **K1** und **K2** werden in Bezug auf ihre Konsistenz bevorzugt so eingestellt, dass sie bei Umgebungsbedingungen mit einfachen Verfahren gut, d.h. möglichst schnell und vollständig, miteinander vermischt werden können. Bevorzugt sind die beiden Komponenten flüssig oder pastös.

Jede der beiden Komponenten ist in einer geeigneten Verpackung für sich allein lagerstabil. Geeignete Gebinde sind insbesondere Fässer, Container, Hobbocks, Eimer, Kanister, Dosen, Beutel, Schlauchbeutel, Kartuschen oder Tuben.

Zur Anwendung der härtbaren Zusammensetzung werden die Komponenten kurz vor oder während der Applikation miteinander vermischt. Das Mischungsverhältnis wird dabei bevorzugt so gewählt, dass das Verhältnis der Anzahl Ketoestergruppen der Formel (II) zur Anzahl Aldimingruppen der Formel (I) im beschriebenen Bereich liegt. In Gewichtsteilen liegt das Mischungsverhältnis zwischen der Komponente **K1** und der Komponente **K2** typischerweise bei etwa 100:1 bis 1:5, insbesondere 50:1 bis 1:2.

Werden die Komponenten vor der Applikation miteinander vermischt, so muss darauf geachtet werden, dass zwischen dem Vermischen der Komponenten und der Applikation nicht zu viel Zeit vergeht, da es sonst durch die einsetzende Reaktion und dem damit verbundenen Anstieg der Viskosität zu Störungen wie beispielsweise einem ungenügenden Applizierbarkeit, optischen Defekten oder einer verlangsamten oder unvollständigen Haftung zum Substrat kommen kann. Insbesondere soll die Offenzeit der Zusammensetzung während der Applikation nicht überschritten werden.

Als "Offenzeit" wird die Zeitspanne zwischen dem Vermischen der Komponenten und dem Ende eines für die Verarbeitung geeigneten Zustands der Zusammensetzung bezeichnet.

Das Vermischen erfolgt bevorzugt bei Umgebungstemperatur, bevorzugt bei einer Temperatur im Bereich von -5 bis 50 °C, bevorzugt 0 bis 40 °C, insbesondere 5 bis 35 °C.

Mit dem Vermischen der Inhaltsstoffe bzw. der Komponenten beginnt die Zusammensetzung durch die einsetzende chemische Reaktion auszuhärten. Dabei reagieren Verbindungen mit Ketoestergruppen der Formel (II) mit Aldimingruppen der Formel (I). Es kann vermutet werden, dass typischerweise zwei Ketoestergruppen mit einer Aldimingruppe unter Freisetzung von Wasser zu einer cyclischen Struktureinheit reagieren. Dabei wird kein Aldehyd freigesetzt und es entsteht somit kein Aldehyd-Geruch. Dies ist sehr vorteilhaft, da die den Aldimingruppen zugrunde liegenden Aldehyde geruchsintensiv sind.

Die Aushärtung erfolgt bevorzugt bei Umgebungstemperatur, bevorzugt bei einer Temperatur im Bereich von -5 bis 50°C, insbesondere 0 bis 40°C.

Ein weiterer Gegenstand der Erfindung ist die ausgehärtete Zusammensetzung, erhalten aus der beschriebenen Verwendung oder der beschriebenen härtbaren Zusammensetzung nach dem Vermischen der Inhaltsstoffe oder Komponenten und anschliessendem Aushärten durch chemische Reaktion.

Die ausgehärtete Zusammensetzung ist elastisch oder zähelastisch. Sie verfügt über eine schnelle Aushärtung und eine überraschend hohe Dehnung bei hoher Härte und Festigkeit, insbesondere im Vergleich zu einer Zusammensetzung mit Aldimingruppen abgeleitet von Benzaldehyd anstelle der Aldimingruppen der Formel (I).

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Merck.

Die **Viskosität** wurde jeweils auf einem thermostatisierten Kegel-Platten-Viskosimeter Rheotec RC30 (Kegeldurchmesser 25 mm, Kegelwinkel 1°, Kegelspitze-Platten-Abstand 0.05 mm, Scherrate 25 s⁻¹) gemessen.

**Infrarotspektren** (FT-IR) wurden als unverdünnte Filme auf einem mit horizontaler ATR-Messeinheit mit Diamant-Kristall ausgestatteten FT-IR Gerät Nicolet iS5 von Thermo Scientific gemessen. Die Absorptionsbanden sind in Wellenzahlen (cm⁻¹) angegeben.

### Herstellung von Polymeren mit Acetoacetatgruppen:

### Polymer P1:

800 g (0.5 mol OH) Polyoxypropylentriol (Voranol^{®} CP 4755, OH-Zahl 35 mg KOH/g, OH-Funktionalität ca. 2.4, von Dow), wurde mit 71.6 g (0.55 mol) Ethylacetoacetat und 1.0 g Tetra-n-butyltitanat (Tyzor^{®} TnBT, von Dorf Ketal) versetzt und unter Vakuum und Entfernung der flüchtigen Bestandteile bei einer Temperatur von 80 bis 140 °C umgesetzt. Erhalten wurde eine klare, leicht gelbliche Flüssigkeit mit einer Viskosität bei 20 °C von 1.19 Pa·s und einem theoretischen Acetoacetat-Equivalentgewicht von 1687 g/eq.

### Polymer P2:

840 g (3.5 mol OH) Rizinusöl-basiertes Polyol (Setathane^{®} D 1145, OH-Zahl 234 mg KOH/g, von Allnex) wurde mit 501 g (3.85 mol) Ethylacetoacetat und 1.3 g Tetra-n-butyltitanat (Tyzor^{®} TnBT, von Dorf Ketal) versetzt und unter Vakuum und Entfernung der flüchtigen Bestandteile bei einer Temperatur von 80 bis 140 °C umgesetzt. Erhalten wurden 1'086 g einer klaren, farblosen Flüssigkeit mit einer Viskosität bei 20 °C von 1.06 Pa·s und einem theoretischen Acetoacetat-Equivalentgewicht von 324 g/eq.

### Polymer P3:

500 g (1.1 mol OH) amorphes Dimerfettsäure-basiertes Polyesterdiol mit OH-Zahl 123 mg KOH/g wurde mit 156.2 g (1.2 mol) Ethylacetoacetat und 0.6 g Tetra-n-butyltitanat (Tyzor^{®} TnBT, von Dorf Ketal) versetzt und unter Vakuum und Entfernung der flüchtigen Bestandteile bei einer Temperatur von 80 bis 140 °C umgesetzt. Erhalten wurde eine klare, gelbliche Flüssigkeit mit einem theoretischen Acetoacetat-Equivalentgewicht von 540 g/eq.

### Herstellung von weiteren Verbindungen mit Acetoacetatgruppen:

### Acac-1:

146.2 g (1 mol) 2-Ethyl-1,3-hexandiol wurde mit 286.3 g (2.2 mol) Ethylacetoacetat und 0.3 g Tetra-n-butyltitanat versetzt und bei einer Temperatur von 140 °C unter Vakuum umgesetzt, bis im FT-IR die breite OH-Bande im Bereich von 3'300 bis 3'600 cm⁻¹ verschwunden war und keine flüchtigen Stoffe mehr abgeschieden wurden. Erhalten wurden 310.8 g 2-Ethyl-1,3-hexandioldiacetoacetat als klare, gelbliche Flüssigkeit mit einer Viskosität bei 20 °C von < 0.05 Pa·s und einem theoretischen Acetoacetat-Equivalentgewicht von 157 g/eq.

### Acac-2:

118.2 g (1 mol) 3-Methyl-1,5-pentandiol wurde mit 286.3 g (2.2 mol) Ethylacetoacetat und 0.3 g Tetra-n-butyltitanat versetzt und bei einer Temperatur von 140 °C unter Vakuum umgesetzt, bis im FT-IR die breite OH-Bande im Bereich von 3'300 bis 3'600 cm⁻¹ verschwunden war und keine flüchtigen Stoffe mehr abgeschieden wurden. Erhalten wurde 3-Methyl-1,5-pentandioldiacetoacetat als klare, gelbliche Flüssigkeit mit einem theoretischen Acetoacetat-Equivalentgewicht von 143 g/eq.

### Herstellung von Aldiminen:

### Aldimin A1:

720.9 g (6 mol) p-Tolualdehyd wurde unter Stickstoffatmosphäre vorgelegt, unter Rühren und Kühlung mit 474.9 g (3 mol) 2,2(4),4-Trimethyl-1,6-hexandiamin (Vestamin^{®} TMD, von Evonik) versetzt und anschliessend die flüchtigen Bestandteile bei 90 °C und 10 mbar Vakuum entfernt. Erhalten wurden 1084.4 g N,N'-Di(4-methylbenzyliden)-2,2(4),4-trimethyl-1,6-hexandiamin als klare, gelbliche Flüssigkeit mit einer Aminzahl von 306 mg KOH/g, einem theoretischen Aldimin-Equivalentgewicht von 181.3 g/eq.

FT-IR: 2952, 2920, 2867, 2834, 1647, 1608, 1574, 1511, 1455, 1411, 1376, 1364, 1305, 1291, 1173, 1107, 1020, 972, 858, 811, 770, 711.

### Aldimin A2:

408.5 g (3.4 mol) p-Tolualdehyd wurde unter Stickstoffatmosphäre vorgelegt, unter Rühren und Kühlung mit 173.7 g (1.7 mol) 1,5-Pentandiamin (von Cathay Biotech) versetzt und anschliessend die flüchtigen Bestandteile bei 90 °C und 10 mbar Vakuum entfernt. Erhalten wurden 519.1 g N,N'-Di(4-methylbenzyliden)-1,5-pentandiamin als klare, gelbliche Flüssigkeit mit einer Aminzahl von 367 mg KOH/g, einem theoretischen Aldimin-Equivalentgewicht von 153.2 g/eq.

FT-IR: 2926, 2829, 1645, 1609, 1573, 1511, 1447, 1411, 1376, 1340, 1305, 1290, 1173, 1107, 1020, 966, 811, 770, 711.

### Aldimin A3:

741.0 g (5 mol) Cuminaldehyd (4-Isopropylbenzaldehyd) wurde unter Stickstoffatmosphäre vorgelegt, unter Rühren und Kühlung mit 395.7 g (2.5 mol) 2,2(4),4-Trimethyl-1,6-hexandiamin (Vestamin^{®} TMD, von Evonik) versetzt und anschliessend die flüchtigen Bestandteile bei 90 °C und 10 mbar Vakuum entfernt. Erhalten wurden 1047.1 g N,N'-Di(4-isopropylbenzyliden)-2,2(4),4-trimethyl-1,6-hexandiamin als klare, gelbliche Flüssigkeit mit einer Aminzahl von 266 mg KOH/g, einem theoretischen Aldimin-Equivalentgewicht von 209.3 g/eq.

FT-IR: 2957, 2925, 2869, 2835, 1645, 1609, 1571, 1510, 1459, 1419, 1384, 1363, 1336, 1303, 1285, 1222, 1175, 1097, 1053, 1018, 973, 826, 735.

### Aldimin R1:

212.2 g (2 mol) Benzaldehyd wurde unter Stickstoffatmosphäre vorgelegt, unter Rühren und Kühlung mit 158.3 g (1 mol) 2,2(4),4-Trimethyl-1,6-hexandiamin (Vestamin^{®} TMD, von Evonik) versetzt und anschliessend die flüchtigen Bestandteile bei 90 °C und 10 mbar Vakuum entfernt. Erhalten wurde N,N'-Dibenzyliden-2,2(4),4-trimethyl-1,6-hexandiamin als klare, gelbliche Flüssigkeit mit einem theoretischen Aldimin-Equivalentgewicht von 170 g/eq.

### Aldimin R2:

212.2 g (2 mol) Benzaldehyd wurde unter Stickstoffatmosphäre vorgelegt, unter Rühren und Kühlung mit 102.2 g (1 mol) 1,5-Pentandiamin (von Cathay Biotech) versetzt und anschliessend die flüchtigen Bestandteile bei 90 °C und 10 mbar Vakuum entfernt. Erhalten wurden 286.0 g N,N'-Dibenzyliden-1,5-pentandiamin als klare, gelbliche Flüssigkeit mit einem theoretischen Aldimin-Equivalentgewicht von 139.2 g/eq.

Die Aldimine **A1** bis **A3** haben Aldimingruppen der Formel (I). Die Aldimine **R1** und **R2** sind abgeleitet von Benzaldehyd und dienen als Vergleich.

### Herstellung von härtbaren Zusammensetzungen:

### Zusammensetzungen Z-1 bis Z-16:

Für jede Zusammensetzung wurden die in den Tabellen 1 und 2 angegebenen Inhaltsstoffe der Komponente **K1** in den angegebenen Mengen (in Gewichtsteilen) vermischt und in einem verschlossenen Gebinde aufbewahrt.

Als Komponente **K2** wurde das in den Tabellen 1 und 2 angegebene Aldimin in der angegebenen Menge (in Gewichtsteilen) eingesetzt.

Anschliessend wurden die Komponenten **K1** und **K2** jeder Zusammensetzung mittels eines Zentrifugalmischers (Thinky ARE-250, 2000 U/min, 60 s) vermischt und wie folgt beschrieben geprüft.

Die **Offenzeit** wurde bestimmt, indem 10 g der vermischten Zusammensetzung mittels eines Spatels in regelmässigen Zeitabständen bewegt wurden, bis die Masse so stark angedickt hatte, dass eine Verarbeitung als selbstverlaufende Beschichtung gefühlsmässig nicht mehr möglich war.

Zur Bestimmung der mechanischen Eigenschaften wurde die vermischte Zusammensetzung auf eine PTFE-beschichtete Folie zu einem Film von 2 mm Dicke ausgegossen, dieser durch Lagerung während 14 Tagen im Normklima ausgehärtet, einige hantelförmige Prüfkörper (Länge 75 mm, Steglänge 30 mm, Stegbreite 4 mm) aus dem Film gestanzt und diese gemäss DIN EN 53504 bei einer Zuggeschwindigkeit von 200 mm/min auf **Zugfestigkeit, Bruchdehnung** und **E-Modul 5 %** (zwischen 0.5-5 % Dehnung) geprüft. Weiter wurden einige Prüfkörper zur Bestimmung des **Weiterreisswiderstandes** aus dem Film von 2 mm Dicke ausgestanzt und gemäss DIN ISO 34-1, Verfahren B (winkelförmiger Prüfkörper) bei einer Zuggeschwindigkeit von 500 mm/min geprüft.

Die **Shore Härte** wurde gemäss DIN 53505 an zylindrischen Prüfkörpern (Durchmesser 20 mm, Dicke 5 mm) nach Aushärtung während 14 Tagen im Normklima geprüft.

Die Resultate sind in den Tabellen 1 und 2 angegeben.

Die mit **"(Ref.)"** bezeichneten Zusammensetzungen sind Vergleichsbeispiele.

Die Zusammensetzungen sind so berechnet, dass zwischen den Vergleichen **Z-1 (Ref.)** bis **Z-3,** bzw. **Z-4 (Ref.)** bis **Z-6,** bzw. **Z-7 (Ref.)** und **Z-8,** bzw. **Z-9 (Ref.)** und **Z-10.** bzw. **Z-11 (Ref.)** und **Z-12,** bzw. **Z-13 (Ref.)** und **Z-14,** bzw. **Z-15 (Ref.)** und **Z-16** jeweils die gleiche Anzahl Aldimingruppen bezogen auf 100 Gewichtsteile der Summe aus den Komponenten **K1** und **K2** vorhanden waren. Dadurch entstand ein ausgehärtetes Produkt mit einer einheitlichen Vernetzungsdichte.

**Tabelle 1: Zusammensetzung und Eigenschaften von Z-1 bis Z-8. "n.b." steht für "nicht bestimmt"**

| **Zusammensetzung** | **Z-1 (Ref.)** | **Z-2** | **Z-3** | **Z-4 (Ref.** | **Z-5** | **Z-6** | **Z-7 (Ref.)** | **Z-8** |
|---|---|---|---|---|---|---|---|---|
| **Komponente K1:** | | | | | | | | |
| Polymer **P1** | 36.3 | 36.5 | 32.8 | 42.3 | 42.6 | 39.3 | 40.1 | 39.8 |
| Acac-**1** | 63.7 | 63.5 | 67.2 | - | - | - | 59.9 | 60.2 |
| Acac-**2** | - | - | - | 57.7 | 57.4 | 60.7 | - | - |

| **Komponente K2:** | | | | | | | | |
|---|---|---|---|---|---|---|---|---|
| Aldimin | **R1** | **A1** | **A3** | **R1** | **A1** | **A3** | **R2** | **A2** |
| | 28.9 | 30.8 | 37.4 | 28.9 | 30.8 | 37.4 | 24.2 | 24.9 |
| Offenzeit [h:min] | 2:40 | 1:15 | 0:40 | 3:20 | 1:35 | 1:00 | 2:00 | 1:45 |
| Zugfestigkeit [MPa] | 13 | 12.5 | 11.2 | 11.2 | 11.3 | 10.4 | 12.2 | 10.9 |
| Bruchdehnung [%] | 96 | 183 | 150 | 75 | 143 | 133 | 90 | 135 |
| E-Modul 5 % [MPa] | 270 | 171 | 218 | 218 | 150 | 132 | 186 | 115 |
| Weiterreisswiderstand [N/mm] | 69 | 63 | 67 | 65 | 52 | 48 | 50 | 50 |
| Shore Härte | D 60 | D 58 | D 59 | D 50 | D 58 | D 57 | D 58 | D 55 |

**Tabelle 2: Zusammensetzung und Eigenschaften von Z-9 bis Z-16. "n.b." steht für "nicht bestimmt"**

| **Zusammensetzung** | **Z-9 (Ref.)** | **Z-10** | **Z-11 (Ref.)** | **Z-12** | **Z-13 (Ref.)** | **Z-14** | **Z-15 (Ref.)** | **Z-16** |
|---|---|---|---|---|---|---|---|---|
| **Komponente K1:** | | | | | | | | |
| Polymer **P2** | 65.0 | 65.0 | 73.8 | 71.6 | - | - | - | - |
| Polymer **P3** | - | - | - | - | 54.8 | 53.25 | 77.4 | 76.6 |
| Acac-1 | 35.0 | 35.0 | - | - | - | - | - | - |
| Acac-2 | - | - | 26.2 | 28.4 | 45.2 | 46.75 | 22.6 | 23.4 |

| **Komponente K2:** | | | | | | | | |
|---|---|---|---|---|---|---|---|---|
| Aldimin | **R1** | **A1** | **R2** | **A2** | **R1** | **A1** | **R1** | **A1** |
| | 28.4 | 30.8 | 22.1 | 24.9 | 28.4 | 30.8 | 20.5 | 22.1 |
| Offenzeit [h:min] | 0:35 | 0:22 | 1:00 | 1:05 | 0:20 | 0:45 | 0:15 | 0:17 |
| Zugfestigkeit [MPa] | 31.6 | 28.1 | 32.8 | 21.4 | 13.9 | 17.5 | 10.6 | 9.9 |
| Bruchdehnung [%] | 35 | 50 | 15 | 60 | 136 | 165 | 206 | 246 |
| E-Modul 5 % [MPa] | 651 | 588 | 684 | 426 | 204 | 267 | 14.1 | 11.5 |
| Weiterreisswiderstand [N/mm] | 16 | 14.5 | 98 | 101 | 72 | 90 | 26 | 17 |
| Shore Härte | D 74 | D 73 | D 76 | D 73 | D 57 | D 61 | A 68 | A 62 |

## Patentansprüche

1. Verwendung von mindestens einem Aldimin mit Aldimingruppen der Formel (I) zum Aushärten einer Zusammensetzung enthaltend mindestens ein Polymer **P** mit Ketoestergruppen der Formel (II) ausgewählt aus Polyetherpolymeren, Polyesterpolymeren, Rizinusöl-basierten Polymeren und Polybutadienpolymeren, 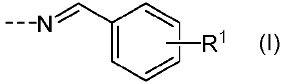 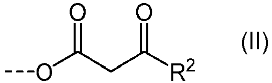 wobei R¹ für einen Alkylrest mit 1 bis 4 C-Atomen steht, und R² für einen einwertigen Kohlenwasserstoffrest mit 1 bis 6 C-Atomen steht.

2. Verwendung gemäss Anspruch 1, **dadurch gekennzeichnet, dass** R¹ für Methyl, Ethyl, Isopropyl oder Isobutyl steht.

3. Verwendung gemäss Anspruch 1 oder 2, **dadurch gekennzeichnet, dass** R¹ in para-Stellung steht.

4. Verwendung gemäss einem der Ansprüche 1 bis 3, **dadurch gekennzeichnet, dass** R¹ für Methyl steht.

5. Verwendung gemäss einem der Ansprüche 1 bis 4, **dadurch gekennzeichnet, dass** das Aldimin mindestens zwei Aldimingruppen der Formel (I) enthält.

6. Verwendung gemäss einem der Ansprüche 1 bis 5, **dadurch gekennzeichnet, dass** das Aldimin mit Aldimingruppen der Formel (I) ein Aldimin-Equivalentgewicht von 132 115 bis 2'500 g/eq, bevorzugt 139 bis 1'200 g/eq, insbesondere 153 bis 800 g/eq, hat.

7. Verwendung gemäss einem der Ansprüche 1 bis 6, **dadurch gekennzeichnet, dass** das Aldimin ausgewählt ist aus der Liste bestehend aus N,N'-Di(4-me-thylbenzyliden)-1,5-pentandiamin, N,N'-Di(4-methylbenzyliden)-1,6-hexandiamin, N,N'-Di(4-methylbenzyliden)-2-methyl-1,5-pentandiamin, N,N'- Di(4-methylbenzyliden)-2,2(4),4-trimethyl-1,6-hexandiamin, N,N'-Di(4-methyl-benzyliden)polyoxypropylendiaminen mit mittlerem Molekulargewicht Mₙ von 400 bis 4'000 g/mol, insbesondere 400 bis 700 g/mol, N,N',N"-Tri(4-methyl-benzyliden)polyoxypropylentriaminen mit mittlerem Molekulargewicht Mₙ von 500 bis 5'000 g/mol, insbesondere 600 bis 800 g/mol, Aldiminen aus der Addition von N-(4-Methylbenzyliden)-2-(2-aminoethoxy)ethanol an Polyisocyanate, und entsprechenden Verbindungen abgeleitet von 4-Ethylbenzaldehyd, 4-Isopropylbenzaldehyd oder 4-Isobutylbenzaldehyd anstelle von 4-Methylbenzaldehyd.

8. Verwendung gemäss einem der Ansprüche 1 bis 7, **dadurch gekennzeichnet, dass** R² für Methyl steht und die Ketoestergruppen der Formel (II) somit Acetoacetatgruppen sind.

9. Verwendung gemäss einem der Ansprüche 1 bis 8, **dadurch gekennzeichnet, dass** das Polymer **P** eine mittlere Ketoester-Funktionalität von 1.8 bis 3.5 und ein mittleres Molekulargewicht Mₙ von 800 bis 20'000 g/mol aufweist.

10. Verwendung gemäss einem der Ansprüche 1 bis 9, **dadurch gekennzeichnet, dass** die Zusammensetzung zusätzlich mindestens eine weitere Verbindung mit mindestens zwei Ketoestergruppen der Formel (II) enthält, insbesondere ausgewählt aus der Liste bestehend aus 1,2-Propandioldiacetoacetat, Dipropylenglykoldiacetoacetat, Tripropylenglykodiacetoacetat, 1,3-Propandioldiacetoacetat, 1,4-Butandioldiacetoacetat, 1,2-Butandioldiacetoacetat, 2-Methyl-1,3-propandioldiacetoacetat, 1,5-Pentandioldiacetoacetat, 1,2-Pentandioldiacetoacetat, Neopentylglykoldiacetoacetat, 2-Methyl-1,4-butandioldiacetoacetat, 1,6-Hexandioldiacetoacetat, 3-Methyl-1,5-pentandioldiacetoacetat, 1,8-Octandioldiacetoacetat, 2-Ethyl-1,3-hexandioldiacetoacetat, 1,10-Decandioldiacetoacetat, 1,12-Dodecandioldiacetoacetat, Polytetrahydrofurandioldiacetoacetaten, 1,3-Cyclohexandimethanoldiacetoacetat, 1,4-Cyclohexandimethanoldiacetoacetat, Isosorbiddiacetoacetat, 2,5-Bis-(hydroxymethyl)tetrahydrofurandiacetoacetat, 2,5(6)-Bis(hydroxymethyl)-bicyclo[2.2.1]heptandiacetoacetat, 3(4),8(9)-Bis(hydroxymethyl)tricyclo-[5.2.1.0^{2,6}]decandiacetoacetat, hydriertes Bisphenol F-diacetoacetat, hydriertes Bisphenol A-diacetoacetat, Glycerindiacetoacetat, Glycerintriacetoacetat, 1,1,1-Trimethylolethandiacetoacetat, 1,1,1-Trimethylolethantriacetoacetat, 1,1,1-Trimethylolpropandiacetoacetat, 1,1,1-Trimethylolpropantriacetoacetat, Pentaerythrittriacetoacetat, Pentaerythrittetraacetoacetat, Dipentaerythrittriacetoacetat, dem Triacetoacetat von ethoxyliertem und insbesondere propoxyliertem Glycerin, dem Triacetoacetat von ethoxyliertem und insbesondere propoxyliertem 1,1,1-Trimethylolpropan, Poly(oxy-1,2-propylen)dioldi-acetoacetaten und Acetoacetat-funktionellen Pflanzenölen.

11. Verwendung gemäss einem der Ansprüche 1 bis 10, **dadurch gekennzeichnet, dass** das Verhältnis der Anzahl Ketoestergruppen der Formel (II) zur Anzahl Aldimingruppen der Formel (I) im Bereich von 1 bis 4, bevorzugt 1.5 bis 3.5, insbesondere 2 bis 3, liegt.

12. Härtbare Zusammensetzung, erhalten aus der Verwendung gemäss einem der Ansprüche 1 bis 11.

13. Härtbare Zusammensetzung gemäss Anspruch 12, **dadurch gekennzeichnet, dass** bezogen auf die gesamte Zusammensetzung weniger als 10 Gewichts-%, bevorzugt weniger als 5 Gewichts-%, insbesondere weniger als 1 Gewichts-%, flüchtige organische Lösemittel mit einem Siedepunkt bei Normaldruck von weniger als 250 °C enthalten sind.

14. Härtbare Zusammensetzung gemäss Anspruch 12 oder 13, **dadurch gekennzeichnet, dass** die Zusammensetzung eine Komponente **K1** und eine Komponente **K2** umfasst, welche voneinander getrennt hergestellt und verpackt sind, wobei Verbindungen mit Ketoestergruppen der Formel (II) Bestandteil der Komponente **K1** und Verbindungen mit Aldimingruppen der Formel (I) Bestandteil der Komponente **K2** sind.

15. Ausgehärtete Zusammensetzung, erhalten aus der Verwendung gemäss einem der Ansprüche 1 bis 11 oder der härtbaren Zusammensetzung gemäss einem der Ansprüche 12 bis 14 nach dem Vermischen der Inhaltsstoffe oder Komponenten und anschliessendem Aushärten durch chemische Reaktion.
